(19) Europäisches Patentamt

European Patent Office

Office européen des brevets

(11) **EP 1 087 916 B1**

(12) **FASCICULE DE BREVET EUROPEEN**

(45) Date de publication et mention
de la délivrance du brevet:
**12.04.2006 Bulletin 2006/15**

(51) Int Cl.:
***C03C 17/25*** (2006.01)     ***C03C 17/00*** (2006.01)
***B01J 35/00*** (2006.01)

(21) Numéro de dépôt: **99937921.7**

(22) Date de dépôt: **05.03.1999**

(86) Numéro de dépôt international:
**PCT/FR1999/000511**

(87) Numéro de publication internationale:
**WO 1999/044954 (10.09.1999 Gazette 1999/36)**

(54) **SUBSTRAT A REVETEMENT PHOTOCATALYTIQUE**

SUBSTRAT MIT PHOTOKATALYTISCHER BESCHICHTUNG

SUBSTRATE WITH PHOTOCATALYTIC COATING

(84) Etats contractants désignés:
**AT BE CH DE DK ES FR GB IT LI LU NL PT SE**

(30) Priorité: **05.03.1998 FR 9802676**

(43) Date de publication de la demande:
**04.04.2001 Bulletin 2001/14**

(73) Titulaires:
• **SAINT-GOBAIN GLASS FRANCE**
**92400 Courbevoie (FR)**
• **RHODIA CHIMIE**
**92408 Courbevoie Cédex (FR)**

(72) Inventeurs:
• **TALPAERT, Xavier**
**F-75019 Paris (FR)**

• **SIMONET, Michel**
**F-94000 Creteil (FR)**
• **LEHAUT, Corinne**
**F-75011 Paris (FR)**
• **CHOPIN, Thierry**
**95320 Saint-Leu La Forêt (FR)**
• **MAGNIN-FEYSOT, Frédéric**
**77380 Combs La Ville (FR)**

(74) Mandataire: **Muller, René et al**
**SAINT-GOBAIN RECHERCHE**
**39, quai Lucien Lefranc**
**93300 Aubervilliers (FR)**

(56) Documents cités:
WO-A-96/00198     WO-A-97/10185
WO-A-97/10186

**Description**

La présente invention concerne des substrats munis d'un revêtement photocatalytique, le procédé d'obtention d'un tel revêtement et ses différentes applications.

Elle concerne plus particulièrement les revêtements comprenant des matériaux semi-conducteurs à base d'oxyde métallique, notamment d'oxyde de titane, qui sont aptes, sous l'effet d'un rayonnement de longueur d'onde adéquate, à initier des réactions radicalaires provoquant l'oxydation de produits organiques.

Les revêtements permettent ainsi de conférer de nouvelles fonctionnalités aux matériaux qu'ils recouvrent, notamment des propriétés anti-salissures, fongicides, bactéricides, éventuellement combinées à des propriétés hydrophiles, anti-buée, optiques, ...

Des substrats très divers peuvent être envisagés, notamment ceux utilisés dans le domaine des véhicules ou des bâtiments, tels que des vitrages, des matériaux de façade, de bardage, de toiture, de sol, tels que des tuiles, des ardoises, des dalles, des carrelages, et plus généralement tout matériau utilisé dans la construction. Ces matériaux peuvent être ainsi en verre, métal, en vitrocéramique, en céramique, en ciment, en briques, en bois, en pierre ou matériau reconstitué à partir de ces matériaux naturels, en matériau plastique, en matériau fibreux du type laine minérale, notamment pour des procédés de filtration, etc....

On peut les ranger également en matériaux transparents, utilisés en particulier comme vitrages, tels que des substrats verriers ou en plastique souple ou rigide comme des substrats en polyester ou en acrylate comme le polyméthacrylate de méthyle (PMMA). Les substrats peuvent aussi être rangés dans la catégorie des non ou peu poreux (verre) ou dans la catégorie des matériaux (relativement) poreux tels que des tuiles, les céramiques.

On peut aussi considérer les substrats « mono-matériaux » comme les substrats verriers, ou les substrats comportant une superposition de matériaux, de couches, comme les façades que l'on munit d'un revêtement du type enduit de façade.

Il est déjà connu des demandes de brevet internationales WO97/10186 et WO97/10185 des revêtements contenant du $TiO_2$ cristallisé anatase à propriétés photocatalytiques, revêtements obtenus à partir de la décomposition thermique de précurseurs organo-métalliques appropriés et/ou à partir de particules de $TiO_2$ « pré-cristallisées » et enrobées dans un liant minéral ou organique.

L'invention a alors pour but d'améliorer ces types de revêtement afin que leurs performances photocatalytiques soient prolongées dans le temps, face à des conditions de vieillissement que l'on peut rencontrer dans les diverses applications envisagées.

L'invention a ainsi pour but d'améliorer ces types de revêtements, notamment en conservant ou en augmentant leurs propriétés photocatalytiques tout en augmentant leur durabilité, notamment mécanique ou chimique.

L'invention a tout d'abord pour objet un procédé d'obtention d'un substrat muni sur au moins une partie de sa surface d'un revêtement photocatalytique, des particules cristallisées d'un oxyde d'un métal A à propriétés photocatalytiques étant incorporées audit revêtement à l'aide d'un liant minéral comportant au moins un oxyde d'un métal B présentant également des propriétés photocatalytiques à l'état cristallisé. Ce liant peut également comporter optionnellement au moins un oxyde d'un métal M dépourvu de propriétés photocatalytiques et/ou au moins un composé de Si du type oxyde de silicium $SiO_2$, Ce procédé consiste à déposer le revêtement à partir de dispersion(s) en phase liquide contenant :

➡   d'une part lesdites particules cristallisées d'oxyde de métal A,

➡   d'autre part, au moins un composé précurseur de l'oxyde du métal B du liant minéral, et éventuellement un composé précurseur de l'oxyde du métal M et/ou du composé de Si, et ceci dans une proportion relative définie par un rapport A/(B + M + Si) compris entre 60/40 et 40/60. Ce rapport correspond à celui des poids des métaux A d'une part, et B et optionnellement du métal M et du silicium Si d'autre part, entrant respectivement dans la composition de l'oxyde A sous forme de particules et dans celle du(des) précurseur(s) de l'oxyde B, et optionnnellement de l'oxyde M et du composé de Si du type $SiO_2$.

Avantageusement, les conditions de dépôt/traitement du revêtement sont choisies telles que le liant minéral, et tout particulièrement l'oxyde de B qui en fait partie, est au moins partiellement cristallisé dans le revêtement final.

De préférence, les oxydes des métaux A et B sont choisis parmi l'un au moins des oxydes suivants : oxyde de titane, oxyde de zinc, oxyde d'étain, oxyde de tungstène. Un mode de réalisation particulièrement préféré consiste à choisir les oxydes de A et de B tous deux sous forme d'oxyde de titane (dioxyde de titane), dont la forme cristalline anatase est hautement photocatalytique.

Les oxydes de type M dépourvus de propriétés photocatalytiques intrinsèques sont par exemple l'oxyde d'aluminium ou de zirconium.

Les auteurs de la présente invention ont réussi par ce procédé à concilier deux contraintes jusque-là difficilement conciliables, à savoir performances photocatalytiques et durabilité et plus précisément ils sont parvenus à prolonger dans le temps les propriétés photocatalytiques du revêtement. En effet, il s'est avéré que l'effet catalytique du revêtement est vraisemblablement majoritairement obtenu par les particules que l'on y incorpore qui sont déjà cristallisées, déjà actives sur le plan catalytique au départ. La tentation est d'alors d'en augmenter au maximum la quantité dans le revêtement. Mais de manière étonnante, aussi bien des quantités trop élevées que des quantités trop faibles en particules ne se sont pas avérées appropriées en vue du double but recherché (à savoir à la fois des propriétés photocatalytiques et une durabilité suffisante), l'ajustement du ratio découvert par l'invention étant d'autant moins facile à faire que le taux et le type de particules de l'oxyde de A influent vraisemblablement sur la morphologie du liant comportant l'oxyde de B, l'évolution du caractère photocatalytique plus ou moins prononcé et de son maintien dans le temps du revêtement n'étant pas linéaires en fonction de tel ou tel paramètre.

Le procédé selon l'invention a donc découvert que l'on pouvait sélectionner un rapport A/(B + M + Si) dans une gamme parvenant à concilier au mieux un niveau satisfaisant d'activité photocatalytique et le maintien de ce niveau élevé d'activité photocatalytique dans le temps. Les raisons n'en sont pas totalement expliquées, tout au moins pour les performances photocatalytiques du revêtement. Il peut être avancé qu'il est avantageux que le liant minéral contribue lui aussi à l'activité du revêtement. A noter en outre que les revêtements obtenus tendent à avoir d'excellentes propriétés optiques, notamment une transmission lumineuse élevée et un niveau de flou très faible.

Les précurseurs évoqués plus haut de l'oxyde B et éventuellement du ou des oxydes M sont avantageusement des composés organo-métalliques susceptibles de se décomposer en oxyde sous l'effet d'un traitement, notamment thermique, approprié. En ce qui concerne le précurseur du composé de Si, notamment du précurseur de $SiO_2$, on peut utiliser un composé de la famille des alkoxydes de silicium (silanes).

Avantageusement, le procédé selon l'invention utilise des particules cristallisées de l'oxyde de A (notamment du $TiO_2$ majoritairement cristallisé sous forme anatase) sous forme d'agglomérats de cristallites, ayant de préférence des agglomérats de taille moyenne d'environ 5 à 80 nm et de cristallites de taille moyenne d'environ 5 à 20 nm (notamment 5 à 10 nm), en dispersion dans une phase liquide, notamment en suspension colloïdale en milieu aqueux ou en dispersion dans au moins un solvant organique. Ces tailles correspondent aux « diamètres » des agglomérats et cristallites en question, en assimilant leurs formes à des sphères (même si ce n'est pas nécessairement le cas, et que notamment, les agglomérats en question peuvent aussi être approximativement de forme lenticulaire ou en forme de bâtonnet). Plutôt que de parler d'agglomérats de cristallites, on peut en fait utiliser une terminologie plus correcte, à savoir que les agglomérats sont des particules, et les cristallites ce que l'on peut désigner sous le terme de domaine de cohérence cristalline. En première approximation, on peut considérer que l'on retrouve dans le revêtement final les mêmes agglomérats, n'ayant subi que peu ou aucune modification structurelle ou dimensionnelle. En fait, on a pu observer que lorsque le procédé d'obtention du revêtement photocatalytique implique un traitement thermique (détaillé par la suite), ce traitement conduisait à modifier structurellement ces particules, avec une augmentation sensible de la taille des cristallites. Par exemple, quand les cristallites de $TiO_2$ sont au départ de l'ordre de 5 à 10 nm, elles sont généralement dans le revêtement final plutôt de l'ordre de 10 à 20 nm : leur taille a approximativement doublée (facteur 1,5 à 2,5). On trouvera une description détaillée de ces particules par exemple dans la demande WO97/10185 précitée ou dans la demande WO/FR97/02068 du 18 novembre 1997, publiée sous le numéro WO98/23549 ou la demande FR-2 681 534.

De préférence, le(s) composé(s) organo-métallique(s) précurseur(s) de l'oxyde de B, et éventuellement de l'oxyde M, sont choisis dans la famille des tétraalkoxydes de forme $M(OR)_4$, avec M le métal en question et R un radical carboné du type alkyl linéaire ou ramifié, tous identiques ou différents, ayant notamment de 1 à 6 C. On peut ainsi citer le tétrabutoxyde ou le tétraisopropoxyde de titane. On peut aussi les choisir parmi les trialcoxydes du type $MR'(OR)_3$, avec R et R' des radicaux identiques ou différents du type de ceux des tétraalkoxydes cités plus haut, ou parmi des halogénures, notamment des chlorures de titane. Ces précurseurs étant hautement hydrolysables et réactifs, on préfère les mettre en solution avec au moins un agent chélatant /stabilisant, par exemple du type β-dicétone tel que l'acétylacétone (2,4-pentanedione), le benzoylacétone (1-phényl-1,3 butanedione), le di-isopropylacétylacétone, ou encore l'acide acétique la diéthanolamine ou des composés de la famille des glycols tels que l'éthylène glycol ou le tétraoctylène glycol. On ajuste ensuite la concentration en précurseur dans la solution (à un taux d'extrait sec donné par exemple) en effectuant les dilutions appropriées à l'aide de solvant(s) organique(s).

Selon une première variante de l'invention, le liant minéral du revêtement selon l'invention ne comporte que l'oxyde du métal B, le rapport A/(B + M + Si) évoqué plus haut devenant alors plus simplement le rapport A/B.

Selon une seconde variante, le liant minéral comporte l'oxyde de métal B, de type $TiO_2$, et un composé de silicium, de type $SiO_2$, le rapport A/(B + M + Si) devenant alors A/(B + Si).

Le mode de réalisation le plus simple du procédé selon l'invention consiste à déposer le revêtement à partir d'une dispersion contenant le(s) précurseur(s) et d'une dispersion contenant les particules, que l'on prémélange en une dispersion unique avant projection sur le substrat ou immersion de ce dernier dans celle-ci, bien qu'il soit aussi envisageable de faire un dépôt à partir de plusieurs, notamment deux dispersions distinctes, sans prémélange.

Un premier type de technique de dépôt est dit dépôt « à chaud », c'est-à-dire que lors du contact dispersion/ substrat, ce dernier est à une température suffisamment élevée pour autoriser la décomposition thermique du (des) précurseur(s) : c'est la technique du type pyrolyse en phase liquide.

Un second type de technique est dit dépôt « à froid », c'est-à-dire que lors du contact dispersion/substrat, celui-ci se trouve à température ambiante ou tout au moins à une température trop basse pour provoquer la décomposition du(des) précurseur(s) : ce sont les techniques du type sol-gel, avec un mode de dépôt du type « trempé », « cell-coating » , enduction laminaire ou « spray-coating ».

Un traitement thermique postérieur à la phase de mise en contact dispersion/substrat est nécessaire dans le cas des dépôts « à froid », pour durcir le revêtement et assurer la complète décomposition des précurseurs. Mais il s'avère aussi avantageux dans le cas des dépôts « à chaud », car il peut améliorer la cohésion du revêtement et favoriser la cristallisation au moins partielle du liant issu de la décomposition du(des) précurseur(s). Ce traitement est notamment effectué à au moins 400°C, par exemple à plus de 450°C, notamment aux environs de 500 à 550°C ; plus particulièrement quand le substrat est apte à supporter ce type de traitement, ce qui est le cas des substrats à matrice verrière, céramique ou vitrocéramique.

L'invention a également pour objet un substrat muni sur au moins une partie de sa surface d'un revêtement photocatalytique incorporant des particules cristallisées d'un oxyde d'un métal A à propriétés photocatalytiques à l'aide d'un liant minéral au moins partiellement cristallisé comportant un oxyde d'un métal B présentant aussi des propriétés photocatalytiques à l'état cristallisé, notamment un substrat obtenu selon le procédé précédemment décrit. Il se caractérise par une porosité élevée, notamment supérieure à 40% et de préférence comprise entre 45 et 65%. Cette porosité a pu être calculée indirectement, par mesure de l'indice de la couche, en comparaison avec ce qu'il devrait être si le matériau était totalement dense. Cette méthode indirecte est assez représentative de la porosité et de la morphologie de surface de la couche, car la mesure d'indice prend également en compte, au moins en partie, le niveau de rugosité de surface de la couche.

(D'autres méthodes indirectes existent également, notamment celles consistant à mesurer le poids du revêtement déposé par unité de surface du substrat, ramené à une épaisseur de revêtement donnée).

En fait, cette haute porosité a de nombreux avantages. Tout d'abord, elle permet de faire chuter l'indice de réfraction du matériau, d'en moduler l'aspect optique. Dans le cas d'un revêtement à base de $TiO_2$ (c'est-à-dire avec des particules cristallisées $TiO_2$ majoritairement anatase et un liant à base de $TiO_2$, éventuellement combiné avec du $SiO_2$), faire chuter son indice jusqu'à des valeurs d'au plus 2, notamment de l'ordre de 1,4 à 1,8, de préférence d'environ 1,7 à 1,8, permet d'atténuer très fortement son aspect réfléchissant bien connu.

Par ailleurs, la porosité du revêtement est liée à une rugosité de surface importante, d'où une surface développée du revêtement élevée favorisant son activité photocatalytique.

Enfin, cette rugosité, qui est vraisemblablement dans deux ordres différents comme décrit dans le brevet WO98/23549 précité, donne au revêtement un caractère hydrophile renforcé et durable, ce qui lui confère des propriétés anti-pluie, anti-buée marquées (par étalement des gouttes d'eau en film invisible), et favorise l'élimination des salissures minérales par entraînement par l'eau de pluie. De manière surprenante, cette porosité importante n'a pas entraîné une fragilisation trop importante du revêtement sur le plan mécanique.

L'invention a également pour objet un substrat muni sur au moins une partie de sa surface d'un revêtement à propriétés photocatalytiques incorporant des particules cristallisées d'un oxyde d'un métal A à propriétés photocatalytiques à l'aide d'un liant au moins partiellement cristallisé, comportant au moins un oxyde d'un métal B présentant également des propriétés photocatalytiques à l'état cristallisé, et optionnellement au moins un oxyde d'un métal M dépourvu de propriétés photocatalytiques et/ou un composé du silicium du type oxyde de silicium, notamment obtenu selon le procédé précédemment décrit. Il se caractérise par une proportion relative A/(B + M + Si) entre 60/40 et 40/60, en poids ramené au poids des métaux (et éventuellement du Si) entrant respectivement dans la composition des particules de l'oxyde de A et dans la composition de l'oxyde de B, et éventuellement de l'oxyde de M et du composé de Si du liant minéral.

Il est à noter que dans l'invention, le substrat envisagé peut présenter une certaine porosité, quand il s'agit de tuiles par exemple, ou un aspect fibreux (laine minérale d'isolation par exemple). Quand on dit que le substrat est muni du revêtement photocatalytique, il faut donc comprendre que celui-ci est déposé à sa surface, mais qu'il peut également imprégner celui-ci sur une certaine profondeur s'il est poreux/fibreux. C'est la raison pour laquelle on peut exprimer la quantité de revêtement exposé soit par son épaisseur sur le substrat, quand il est non poreux, par exemple quand il s'agit d'un substrat verrier, ou par une quantité de matière par unité de surface, tout particulièrement quand le substrat présente une certaine porosité.

Le revêtement selon l'invention, qu'il soit obtenu par le procédé décrit plus haut, et/ou qu'il soit conforme aux revêtements dont les caractéristiques intrinsèques ont été décrites plus haut, présente avantageusement la structure suivante (tout particulièrement dans le cas où les oxydes de A et B sont tous les deux à base de $TiO_2$) : des particules cristallisées de dimensions entre 5 et 80 nm ayant des domaines de cohérence cristalline de dimensions entre 5 et 20 nm (avec les conventions décrites plus haut), et un liant minéral au moins partiellement sous forme de grains qui viennent se placer autour des particules cristallisées, dans les interstices inter-particules, et qui sont d'une dimension moyenne comprise entre 5 et 25 nm, de préférence 10 à 20 nm. Ces « grains » de forme approximativement sphérique ne sont pas totalement cristallisés, cependant vraisemblablement partiellement cristallisés à une échelle très petite difficilement mesurable et viennent ainsi « enrober » les particules et les lier entre elles.

Avantageusement, le substrat selon l'invention est muni du revêtement photocatalytique de l'invention comprenant des particules de $TiO_2$ essentiellement sous forme anatase et un liant minéral associant du $TiO_2$ partiellement cristallisé et du $SiO_2$. De préférence, le revêtement a un indice d'au plus 2, notamment entre 1,5 et 1,9 ou entre 1,6 et 1,9 ou entre 1,6 et 1,8.

Selon un mode de réalisation, on intercale au moins une couche entre le substrat et le revêtement photocatalytique, couche(s) pouvant avoir différentes fonctions (fonction optique, barrière à des espèces susceptibles de migrer du substrat comme des alcalins, anti-statique, couche d'adhérence, ...).

Il peut s'agir de couches à base de composés de Si, comme Si, $SiO_2$, SiON, SiOC, $Si_3N_4$, ou à base d'oxyde métallique éventuellement dopé ($SnO_2$ :F, $SnO_2$ :Sb, ...).

Les substrats munis de tels revêtements ont déjà été évoqués dans le préambule de la présente demande. Ils peuvent comprendre un matériau transparent du type verre, matériau plastique, notamment pour faire partie de vitrages équipant bâtiments ou véhicules, ou d'écrans d'appareils du type télévision, ordinateur, d'écrans tactiles par exemple, de tout vitrage feuilleté ou « monolithique » (c'est-à-dire ne comportant qu'un seul verre ou qu'une seule feuille de matériau plastique). Il est aussi avantageux d'incorporer un substrat transparent muni du revêtement de l'invention dans une structure de vitrage multiple isolant, soit de façon à ce que le revêtement soit sur une face interne du vitrage, soit sur une face externe du vitrage. Il peut s'agir de vitrages isolants conventionnels à une ou plusieurs lames de gaz intercalaire(s), par exemple du type de ceux commercialisés par Saint-Gobain Vitrage sous l'appellation BIVER ou CLIMALIT D, CONTRATHERM, CONTRASONOR, CONTRARISC, ou ceux dits « sous vide » où la lame de gaz intercalaire est remplacée par le vide, comme décrit par exemple dans le brevet EP-645 516. Dans ce dernier cas, notamment, il est particulièrement intéressant de disposer le revêtement en face externe, sur la face du vitrage isolant tournée vers l'extérieur, pour éviter la formation de buée grâce à son caractère hydrophile.

Le revêtement de l'invention est également avantageux pour des parois vitrées de congélateurs/réfrigérateurs. En fait, de nombreux matériaux peuvent servir de substrats au revêtement selon l'invention, par exemple des matériaux en métal, céramique, plastique, ciment et tous les matériaux cités plus haut utilisés en architecture, pour des applications en tant que matériau de façade, de bardage, de toiture tel que des tuiles, des ardoises. Il peut aussi s'agir de matériaux équipant des sols ou des murs d'habitation intérieurs ou extérieurs, comme des dalles, du carrelage.

On peut aussi déposer le revêtement sur des matériaux fibreux du type laine minérale d'isolation thermique et/ou acoustique, ou encore des fibres du type fil textile de renforcement, ces matériaux fibreux peuvent trouver application dans des procédés de filtration par exemple : on peut ainsi exploiter les propriétés anti-salissures, bactéricides, fongicides, anti-buée du revêtement de l'invention selon les besoins.

L'invention a aussi pour objet la dispersion en phase liquide décrite notamment plus haut et que l'on peut utiliser pour fabriquer le revêtement photocatalytique selon l'invention. Ladite dispersion comprend notamment un solvant choisi parmi l'eau, l'éthylène glycol, l'éthanol, le propylène glycol et leurs mélanges.

La nature de la phase cristalline des particules de dioxyde de titane de la dispersion selon l'invention est, de préférence, majoritairement la forme cristalline anatase. « Majoritairement » signifie que le taux d'anatase des particules de dioxyde de titane du revêtement est supérieur à 50% en masse. De préférence, les particules du revêtement présentent un taux d'anatase supérieur à 80%. Le taux de cristallisation et la nature de la phase cristalline sont mesurés par diffraction RX.

Les dispersions selon l'invention sont généralement obtenus par mélange d'une dispersion des particules de dioxyde de titane et des solutions des composés précurseurs et/ou d'un composé du silicium. On peut, selon la nature des composés utilisés, ajouter également lors de ce mélange des additifs tels que des co-solvants, des tensio-actifs ou des agents de stabilisation. Le mélange peut également être amélioré par agitation de la dispersion par des ultrasons.

D'autres détails et caractéristiques avantageuses de l'invention ressortent de la description ci-après d'exemples de réalisation non limitatifs, à l'aide des figures suivantes :

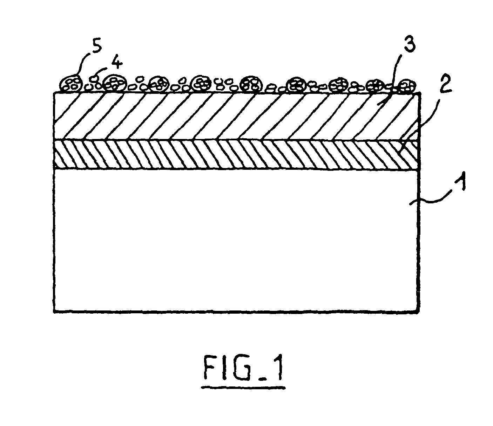

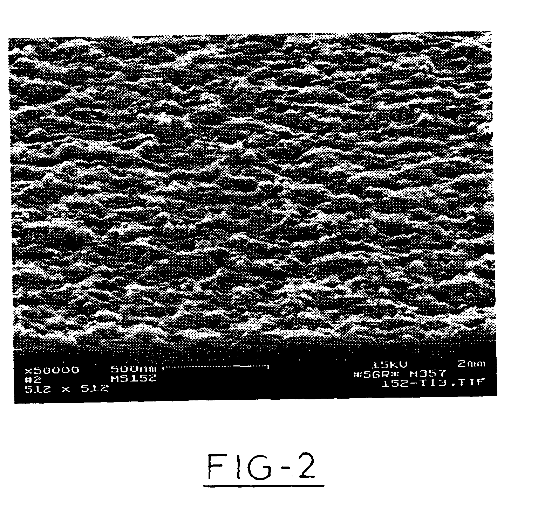

☐ **figure 1 :** une représentation très schématique de la structure d'un revêtement photocatalytique selon l'invention,
☐ **figure 2 :** un cliché obtenu par microscopie à balayage électronique (MEB) de la surface d'un revêtement photocatalytique selon l'invention.

Une première série d'exemples concerne le dépôt d'un revêtement 3 dit « anti-salissures » essentiellement à base d'oxyde de titane sur un substrat transparent 1.

Le substrat 1 est en verre plan clair silico-sodo-calcique 15 x 40 $cm^2$ et de 4 mm d'épaisseur. Il va de soi que l'invention n'est pas limitée à ce type spécifique de verre. Le verre peut en outre ne pas être plan, mais bombé.

Entre le revêtement 3 et le substrat 1, se trouve une couche mince (optionnelle) 2 à base d'oxycarbure de silicium noté SiOC en vue de constituer une barrière à la diffusion aux alcalins qui est néfaste à la propriété photocatalytique du revêtement, et/ou une couche à fonction optique déposée par exemple de manière connue par une technique de pyrolyse en phase vapeur (CVD) et d'une épaisseur environ 50 nm.

On a utilisé deux procédés de dépôt différents « à froid », à savoir un dépôt par trempé en « cell-coating » avec une vitesse de vidange du bain de l'ordre de 5 à 30 cm/minute, et un dépôt par « spray-coating », c'est-à-dire par pulvérisation liquide à froid. Ces techniques bien connues sont détaillées dans les demandes de brevet référencées plus haut, auxquelles on pourra se reporter.

Les dépôts se font à partir d'une dispersion mélangeant deux solutions/dispersions initiales 1 et 2 :

➡ **solution 1 :** c'est la solution contenant le précurseur organo-métallique du liant minéral à base de $TiO_2$. Il s'agit d'isopropylate de titane $Ti(O\ CH(CH_3)_2)_4$, stabilisé avec de l'acétyl acétonate $CH_3\text{-}CO\text{-}CH_2\text{-}CO\text{-}CH_3$, en solution dans de l'éthanol,

➡ **dispersion 2 :** c'est la phase liquide en éthylène glycol contenant les particules cristallisées photocatalytiques, de caractéristiques suivantes :

↪ surface spécifique des particules : $\geq 350\ m^2/g$
↪ tailles des particules : $\approx 40\ nm$
↪ tailles des cristallites qui constituent les particules : $7\ nm$
↪ phase cristalline : anatase à plus de 80%

On ajuste la composition de la dispersion issue du mélange de la solution 1 et de la dispersion 2 pour obtenir le rapport $Ti_{(2)}/Ti_{(1)}$ voulu, c'est-à-dire le rapport du poids de titane (2) provenant des particules de la dispersion 2 sur le poids de titane (1) provenant des précurseurs de la solution 1. (Par convention, le rapport peut aussi être celui du poids d'oxyde de titane provenant des particules sur le poids d'oxyde de titane provenant du précurseur métallique en prenant l'hypothèse que 100% du précurseur est converti en oxyde : cela revient au même).

Les exemples 1 à 7 se rapportent à un dépôt par trempé en cell-coating , à conditions de dépôt comparables, c'est-à-dire avec la même vitesse de vidange du bain (6 cm/minute), et la même concentration en titane (à savoir 3% d'extrait sec, converti en poids d'oxyde) provenant du précurseur dans la solution 1.

A l'issue du dépôt, on fait subir un traitement thermique aux substrats vers 450-500°C pendant au moins 30 minutes.

Le tableau 1 ci-dessous regroupe pour chacun d'eux :

↪ le rapport $Ti_{(2)}/Ti_{(1)}$ explicité plus haut, sans unité,
↪ l'épaisseur (e) du revêtement (3) en nm,
↪ la valeur de transmission lumineuse $T_L$ en %, mesurée selon l'Illuminant $D_{65}$.
↪ la valeur de « flou » en %, mesurée par le rapport de la transmission diffuse sur la transmission lumineuse intégrée sur tout le domaine visible.

## TABLEAU 1

|  | $Ti_{(2)}/Ti_{(1)}$ | e(nm) | $T_L$ (%) | flou (%) |
|---|---|---|---|---|
| EXEMPLE 1 | 0/100 | 20 | 88,5 | 0,88 |
| EXEMPLE 2 | 20/80 | 20 à 30 | 89,6 | 0,27 |
| EXEMPLE 3 | 40/60 | 40 à 50 | 89,5 | 0,76 |
| EXEMPLE 4 | 50/50 | 40 à 60 | 90,2 | 0,50 |
| EXEMPLE 5 | 60/40 | 60 | 90,5 | 0,61 |
| EXEMPLE 6 | 80/20 | 30 à 40 | 89,7 | 0,44 |
| EXEMPLE 7 | 100/0 | 30 à 40 | 90,3 | 1 |

Un exemple 8 a été réalisé à partir de la dispersion conforme à celle utilisée pour l'exemple 4, mais déposée sur le substrat par pulvérisation à froid, par une buse de pulvérisation dite « airless » sous une pression de 0,7 bar

(0,7.10$^5$Pa). La couche obtenue, après traitement thermique vers 450-500°C pendant au moins 30 minutes, a une épaisseur d'environ 35 à 60 nm, avec une valeur de $T_L$ de 88,6% et de flou de 0,6% avec les mêmes conventions qu'au tableau 1.

Les exemples 1 à 8 précédents ont été évalués en termes d'activité photocatalytique, avant puis après un traitement visant à simuler un vieillissement accéléré du revêtement.

La mesure de l'activité photocatalytique s'opère de la façon suivante :

↪ ❶ - test réalisé sur environ 15 cm$^2$ de revêtement,

↪ ❷ - pesée de l'échantillon et mesure de l'épaisseur du substrat, de la $T_L$ et du flou.

↪ ❸ - dépôt par spray d'une solution d'acide palmitique (8g d'acide pour 11 de chloroforme) distance verre/spray 20 cm, substrat vertical, 3 à 4 passages successifs,

↪ ❹ - pesée de l'échantillon après dépôt de l'acide palmitique pour évaluer l'épaisseur d'acide déposée en nanomètres,

↪ ❺ - mesure de flou et de la $T_L$ après dépôt,

↪ ❻ - mesure de la variation du flou en fonction du temps d'irradiation sous U.V.A. ($\approx$ 30 W/m$^2$),

↪ ❼ - détermination graphique du temps au bout duquel le flou a diminué de 50% : temps appelé $T_{1/2}$ (disparition),

↪ ❽ - évaluation de l'activité photocatalytique du revêtement en vitesse de disparition $v$ (en nm/h) défini par :

$$v \text{ (nm/h)} = [\text{épaisseur d'acide palmitique (nm)}]/[2 \times t_{1/2} \text{ (disparition) (h)}]$$

Le vieillissement des revêtements consiste à leur faire subir une abrasion mécanique de la façon suivante :

↪ taille de l'échantillon 7 cm x 15 cm
↪ charge appliquée : 600 grammes
↪ surface du feutre d'abrasion : 1,5 cm$^2$
↪ n cycles (1 cycle = 1 aller-retour de bras porteur du feutre et charge), avec n = 200 et 500.

Le tableau 2 ci-dessous regroupe pour chacun des exemples :

↪ la vitesse de disparition v1 avant abrasion,
↪ la vitesse de disparition v2 après 200 cycles,
↪ la vitesse de disparition v3 après 500 cycles

## TABLEAU 2

|  | V1 ( 0 cycle) | V2 ( 200 cycles) | V3 (500 cycles) |
|---|---|---|---|
| EXEMPLE 1 | 20 | 10 | 0 |
| EXEMPLE 2 | 40 | 5-10 | 0 |
| EXEMPLE 3 | 35 | - | $\approx$ 10 |
| EXEMPLE 4 | 70 | 10-20 | $\approx$ 10 |
| EXEMPLE 5 | 35 | - | $\approx$ 5 |
| EXEMPLE 6 | 20 | 1-2 | 0 |
| EXEMPLE 7 | 20 | 0 | 0 |
| EXEMPLE 8 | 40 | - | 7 |

Par ailleurs, les analyses ont montré que les revêtements des exemples 3, 4 et 5 présentaient une structure vraisemblablement proche de celle, très simplifiée, représentée à la figure 1 représentant le substrat verrier 1, la couche de SiOC 2 et le revêtement 3. Ce revêtement comporte les particules, agrégats de cristallites 5 entre lesquels viennent s'agglomérer des grains 4 de $TiO_2$ amorphes ou légèrement cristallisés qui forment le liant minéral du revêtement.

La figure 2, se rapportant plus précisément à l'exemple 4, est un cliché obtenu par microscopie à balayage électronique donnant une indication sur l'aspect de surface de l'exemple 4 : une surface assez rugueuse, permettant au revêtement d'offrir une surface développée importante.

A noter que l'exemple 4 présente un indice de réfraction d'environ 1,65. En première approximation, on peut donc considérer, sachant que l'indice de réfraction du $TiO_2$ « massif » est de 2,4, que la porosité du revêtement est d'environ (2,4-1,65)/(2,4-1), c'est-à-dire d'environ 54%. Le revêtement selon l'exemple 4 présente également une forte hydrophilie : exposé à des rayons U.V.A. pendant 20 minutes pour l'activer, on le met dans le noir et on mesure l'angle de contact à l'eau φ régulièrement : cet angle de contact reste inférieur à 10° pendant au moins 20 jours dans le noir.

De ces données peuvent être tirées les conclusions suivantes : ce sont les exemples 3, 4, 5 et 8 et, notamment l'exemple 5 où le rapport $Ti_{(2)}/Ti_{(1)}$ est de 50/50 qui cumulent toutes les propriétés recherchées, à savoir :

↪ une haute $T_L$, un flou faible, un indice de réfraction inférieur à 2, donnant au revêtement un aspect optique très favorable,
↪ une activité photocatalytique satisfaisante, qui est toujours présente même après attaque mécanique, ce qui prouve la durabilité des revêtements, et qui permet d'utiliser ces revêtements en conditions réelles, par exemple sur des vitrages en extérieur, en ayant une « durée de vie » acceptable. Ce sont en effet les seuls exemples réalisés qui présentent encore une activité photocatalytique, même modérée, après 500 cycles d'abrasion.

Une seconde série d'exemples concerne le même type de revêtement, à partir des mêmes « solution 1 » et « dispersion 2 ». Les conditions de dépôt sont identiques à celles des exemples 1 à 7 précédentes, à la différence près que maintenant la vitesse de vidange du bain est plus élevée, égale à 24 cm/minute. Une autre différence concerne le substrat: il s'agit du même verre, mais préalablement recouvert d'une première couche en SiOC de 50 nm déposée par CVD puis d'une seconde couche en oxyde d'étain dopé au fluor $SnO_2$ :F de 450 nm, déposée par pyrolyse de poudre de façon connue. Et dans cette série d'exemples, la façon d'évaluer la quantité Q de revêtement photocatalytique n'est pas la mesure de son épaisseur mais la quantité de matière par unité de surface du substrat, exprimée en $\mu g/cm^2$.

L'activité photocatalytique des exemples est mesurée avant tout test d'abrasion, c'est la valeur $V_1$ explicitée plus haut. La durabilité du revêtement est évaluée qualitativement par simple chiffonnage : " ++ " signifie que le revêtement résiste très bien, "+ " qu'il résiste encore de façon correcte et "-" que le revêtement est (quasiment) parti après chiffonnage.

Le tableau 3 ci-dessous regroupe pour les exemples 9 à 13 le ratio $Ti_{(2)}/Ti_{(1)}$ avec la même signification qu'au tableau 1, la valeur Q, la valeur $V_1$, et le test au chiffonnage :

## TABLEAU 3

|  | $Ti_{(2)}/Ti_{(1)}$ | Q($\mu g/cm^2$) | V1 (nm/h) | Chiffonnage |
|---|---|---|---|---|
| EXEMPLE 9 | 0/100 | 22 | 18 | ++ |
| EXEMPLE 10 | 20/80 | 24 | 128 | + |
| EXEMPLE 11 | 40/60 | 23 | 159 | + |
| EXEMPLE 12 | 50/50 | 25 | 231 | + |
| EXEMPLE 13 | 100/0 | 23 | 222 | - |

On peut voir de ce tableau se dégager la même tendance que pour la première série : à quantité de révêtement déposée identique ou quasiment identique, un optimum se trouve pour les exemples 11 et 12 à ratios $Ti_{(2)}/Ti_{(1)}$ 40/60 et 50/50. Seul l'exemple 12 permet d'avoir une activité photocatalytique au-dessus de 200 et une durabilité correcte.

Une troisième série d'exemples concerne un revêtement utilisant des particules de $TiO_2$ de la dispersion utilisée dans tous les exemples précédents, mais avec un liant mixte associant du $TiO_2$ et du $SiO_2$.

La solution contenant les précurseurs du liant utilise :

➡ comme solvant : de l'éthanol et de l'éthylène glycol en proportions massiques 75/25,

➡ comme stabilisant : de l'acétylacétonate,

➡ comme précurseur de $TiO_2$ : du tétrabutoxyde de titane (TBT)

➡ comme précurseur de $SiO_2$ : du tétraéthylorthosilicate (TEOS).

La proportion relative de TBT et de TEOS est ajustée de façon à avoir dans la solution un taux $TiO_2/SiO_2$ de 15/85 en poids (en ayant la convention que tout le TBT se convertit en $TiO_2$ et tout le TEOS en $SiO_2$).

Puis on ajoute cette solution à la dispersion de particules utilisée dans les exemples précédents, dans des proportions telles que l'on obtient le rapport r Ti(particules)/(Ti précurseur + Si précurseur) voulu. (L'extrait sec de la solution est de 3%).

Les conditions de dépôt et de substrat sont identiques à celles des exemples 9 à 13.

Le tableau 4 ci-dessous regroupe les valeurs du rapport r explicité plus haut, de la valeur de vitesse V1 explicitée plus haut, de la réflexion lumineuse de substrat revêtu $R_L$ (%), et de la variation de $T_L$ ($\Delta T_L$) observée après 500 cycles du test d'abrasion décrit dans le cadre de la première série d'exemples, ainsi que le rapport $r_1$ qui exprime les quantités de Ti et de Si en poids d'oxyde :

$$r1 = TiO_2 \text{ (particules)} / (TiO_2 \text{ liant} + SiO_2 \text{ liant})$$

Il indique également $Q_1$ la quantité de $TiO_2$ totale dans le revêtement (particules et $TiO_2$ issu du précurseur de titane) en $\mu g/cm^2$ et $Q_2$ la quantité (calculée) en poids total du revêtement également en $\mu g/cm^2$.

## TABLEAU 4

|  | r | $r_1$ | $V_1$ | $R_L$ | $\Delta T_L$ | $Q_1$ | $Q_2$ |
|---|---|---|---|---|---|---|---|
| Exemple 14 | 45,1/54,9 | 40/60 | 8 | 12,5 | 0 | 8,8 | 18,2 |
| Exemple 15 | 55,3/44,7 | 50/50 | 40 | 10 | 1 | 9,3 | 16,3 |
| Exemple 16 | 65/35 | 60/40 | 45 | 14 | 4 | 10,1 | 15,4 |

En ajustant l'extrait sec de la solution et la vitesse de vidange, des revêtements ont été refaits en fixant le rapport r à 55,3/44,7 et en modulant la quantité de revêtement déposée.

Le tableau 5 ci-dessous reprend, pour ces exemples supplémentaires issus de l'exemple 15, la quantité Q en $\mu g/cm^2$, l'épaisseur correspondante e en nm quand elle a été mesurée, la valeur de $V_1$ (nm/h), la valeur de $R_L$ et de $\Delta T_L$ explicitées plus haut :

## TABLEAU 5

|  | Q | E | $V_1$ | $R_L$ | $\Delta T_L$ |
|---|---|---|---|---|---|
| Exemple 15 bis | 17 | 110 | 42 | 8,5 | 1,5 |
| Exemple 15 ter | 33 | - | 88 | 12,1 | 2,5 |
| Exemple 15 quater | 49 | 460 | 130 | 11 | 0,8 |

De cette troisième série d'exemples, on peut voir l'intérêt à ajouter dans le liant un matériau, $SiO_2$, qui n'intervient pas dans la photocatalyse mais qui permet de mieux homogénéiser le revêtement et qui tend à renforcer sa durabilité.

On voit aussi que si le ratio r est déterminant, d'autres paramètres peuvent aussi intervenir, notamment la valeur Q, de préférence comprise entre 15 et 45 $\mu$g/cm$^2$ pour tenir compte à la fois du coût du revêtement, de l'impact de son épaisseur sur l'aspect optique.

Il va de soi que l'invention ne se limite pas à ces exemples précis. Il est notamment dans le cadre de l'invention d'améliorer encore l'activité photocatalytique des particules 5 en les dopant, en introduisant les dopants dans le réseau cristallin ou en recouvrant les particules desdits dopants, du type Fe, Cu, Ru, Mo, Bi, Ta, Nb, Co, Ni, Va, ... comme décrit dans le brevet WO97/10185 précité.

On peut également dans le cadre de l'invention adjoindre au liant minéral d'autres oxydes non ou peu photocatalytiques à l'état cristallisé, par exemple en joutant à la dispersion des précurseurs d'autres oxydes du type SiO$_2$, tel que le tétraéthoxysilane TEOS.

Le rapport A/(B + M + Si) évoqué plus haut, optimal dans la gamme 40/60 à 60/40, peut aussi, avec un niveau d'exigence moindre, être envisagé dans les gammes 35/65 à 40/60 et 65/35 à 60/40.

## Revendications

1. Procédé d'obtention d'un substrat (1) muni sur au moins une partie de sa surface d'un revêtement (3) à propriétés photocatalytiques, des particules cristallisées (4) d'un oxyde d'un métal A à propriété photocatalytique étant incorporées audit revêtement à l'aide d'un liant minéral (5) comportant au moins un oxyde d'un métal B présentant, également des propriétés photocatalytiques à l'état cristallisé et optionnellement au moins un oxyde d'un métal M sans propriétés photocatalytiques et/ou au moins un composé de silicium Si du type oxyde de silicium, *caractérisé en ce qu'on* dépose le revêtement (3) à partir de dispersions en phase liquide contenant:

   - d'une part lesdites particules cristallisées (4) d'oxyde du métal A,
   - d'autre part au moins un composé précurseur de l'oxyde du métal B du liant (5) et,
   - éventuellement un composé précurseur de l'oxyde du métal M et/ou du composé de Si, dans une proportion relative A/(B + M + Si) en poids ramené au poids des métaux et entrant respectivement dans la composition de l'oxyde A et du(des) précurseur(s) de l'oxyde du métal B et éventuellement de l'oxyde du métal M et du composé de Si comprise entre 60/40 et 40/60.

2. Procédé selon la revendication 1, *caractérisé en* ce que le liant minéral (5) se trouve au moins partiellement cristallisé.

3. Procédé selon la revendication 1 ou la revendication 2, *caractérisé en ce que* les oxydes des métaux A et B sont choisis parmi un au moins des oxydes suivants : dioxyde de titane, oxyde de zinc, oxyde d'étain, oxyde de tungstène.

4. Procédé selon l'une des revendications précédentes, *caractérisé en ce que* le liant minéral ne comporte que l'oxyde du métal B. la proportion A/(B + M + Si) s'exprimant sous la forme A/B.

5. Procédé selon l'une des revendications précédentes, **caractérisé en ce que** le liant minéral comporte l'oxyde du métal B sous forme TiO$_2$, et un composé de silicium sous forme SiO$_2$, la proportion A/(B + M + Si) s'exprimant alors sous la forme A/(B + Si).

6. Procédé selon l'une des revendications précédentes, **caractérisé en ce qu'on** utilise des particules cristallisées (4) de l'oxyde A sous forme de particules, ayant une taille moyenne d'environ 5 nm à 80 nm et des domaines de cohérence cristalline de taille moyenne d'environ 5 nm à 20 nm.

7. Procédé selon l'une des revendications précédentes, **caractérisé en ce que** le(s) composé(s) organo-métallique(s) précurseur(s) de l'oxyde B et éventuellement de l'oxyde M sont choisis dans la famille des tétraalcoxydes de formule M(OR)$_3$, des trialcoxydes de formule MR'(OR)$_3$ ou des halogénures métalliques, avec R, R' des radicaux carbonés.

8. Procédé selon l'une des revendications précédentes, **caractérisé en ce que** le(s) composé(s) organo-métallique(s) précurseur(s) de l'oxyde B et éventuellement de l'oxyde M sont mis en dispersion dans une phase liquide contenant au moins un agent chélatant/stabilisant.

9. Procédé selon l'une des revendications précédentes, *caractérisé en ce qu'on* dépose le revêtement par pyrolyse en phase liquide à partir d'une dispersion contenant le(s) précurseur(s) du type composé(s) organo-métallique(s),

et les particules cristallisées.

**10.** Procédé selon l'une des revendications précédentes, *caractérisé en ce qu'on* dépose le revêtement par une technique de sol-gel avec un mode de dépôt du type trempé, « cell-coating », enduction laminaire, ou pulvérisation à partir d'une dispersion contenant le(s) composé(s) organo-métallique(s) et les particules cristallisées.

**11.** Procédé selon l'une des revendications précédentes, *caractérisé en ce qu'on* traite thermiquement le revêtement à au moins 400°C.

**12.** Substrat (1) susceptible d'être obtenu conformément au procédé selon l'une des revendications précédentes.

**13.** Substrat (1) selon la revendication précédente, **caractérisé en ce que** ledit revêtement (3) présente une porosité calculée par mesure de l'indice de réfraction supérieure à 40%.

**14.** Substrat (1) selon la revendication 12 ou 13, **caractérisé en ce que** le revêtement comprend les particules cristallisées, d'une dimension d'environ 5 à 80 nm et de domaines de cohérence cristalline de dimension d'environ 5 nm à 20 nm, et le liant minéral au moins partiellement sous forme de grains d'une dimension comprise entre 5 et 25 nm.

**15.** Substrat (1) selon l'une des revendications 12 et 13, *caractérisé en ce que* le revêtement comprend des particules cristallisées de $TiO_2$ essentiellement sous forme anatase et un liant minéral à base de $TiO_2$ partiellement cristallisé.

**16.** Substrat selon l'une des revendications 12 à 14, *caractérisé en ce que* le revêtement comprend des particules de $TiO_2$ essentiellement sous forme anatase et un liant minéral associant du $TiO_2$ partiellement cristallisé et du $SiO_2$.

**17.** Substrat selon la revendication 15 ou 16, **caractérisé en ce que** le revêtement a un indice de réfraction d'au plus 2.

**18.** Substrat selon l'une des revendications 12 à 17, **caractérisé en ce qu'**au moins une couche à fonction de barrière aux alcalins et/ou à fonction optique et/ou anti-statique et/ou d'adhérence, est intercalée entre ledit substrat et ledit revêtement à propriétés photocatalytiques.

**19.** Substrat selon l'une des revendications 12 à 18 ou obtenu conformément au procédé selon l'une des revendications 1 à 11, *caractérisé en ce qu'il* comprend au moins un matériau transparent du type verre ou matériau plastique.

**20.** Substrat selon la revendication 19, *caractérisé en ce* **qu'**il fait partie d'un vitrage isolant, en face interne ou externe tel qu'un vitrage isolant conventionnel à lame(s) de gaz intercalaire(s) ou un vitrage isolant «sous vide», ou un vitrage feuilleté ou «monolithique».

**21.** Substrat selon l'une des revendications 12 à 18. *caractérisé en ce qu'il* est en un matériau du type métal, céramique, matériau de façade, matériau de bardage, matériau de toiture, de sol, te! que des tuiles, des ardoises, de la pierre, du bois, dalles, carrelages, matériau cimentaire, matériau plastique, tout matériau architectural, matériau fibreux du type laine minérale d'isolation thermique et/ou acoustique ou fibre textile.

**22.** Dispersion en phase liquide comprenant :

   - des particules de dioxyde de titane cristallisé,
   - au moins un composé précurseur d'un oxyde de métal B présentant des propriétés photocatalytiques à l'état cristallisé,
   - éventuellement au moins un composé précurseur d'un oxyde de métal M et/ou un composé du silicium,

*caractérisée en ce que* les particules, les précurseurs et le composé du silicium sont dans une proportion relative A/(B + M + Si) comprise entre 60/40 et 40/60.

**23.** Dispersion selon la revendication 22, **caractérisée en ce que** les particules de dioxyde de titane sont majoritairement sous forme cristalline anatase.

**24.** Dispersion selon l'une quelconque des revendications 22 ou 23, **caractérisée en ce que** les particules de dioxyde de titane présentent une taille moyenne d'environ 5 à 80 nm et un domaine de cohérence cristalline de taille moyenne d'environ 5 à 20 nm.

**25.** Dispersion selon l'une quelconque des revendications 22 à 34. *caractérisée en ce que* l'oxyde de métal B est choisi parmi le dioxyde de titane, l'oxyde de zinc, l'oxyde d'étain, l'oxyde de tungstène.

**26.** Dispersion selon l'une quelconque des revendications 22 à 25, *caractérisée en* ce que l'oxyde de métal M est choisi parmi les oxydes d'aluminium et de zirconium.

**27.** Dispersion selon l'une quelconque des revendications 22 à 26, **caractérisée en ce que** les composés précurseurs des oxydes de métal B et M sont des composés organo-métalliques.

**28.** Dispersion selon la revendication 27, *caractérisée en ce que* les composés organo-métalliques sont choisis dans la famille des tétraalkoxydes de formule $X(OR)_4$, des trialkoxydes de formule $XR'(OR)_3$ ou des halogénures métalliques, avec R et R' représentant des radicaux carbonés et X représentant Mou B.

**29.** Dispersion selon l'une quelconque des revendications 22 à 28, **caractérisée en ce que** le composé du silicium est choisi parmi les alkoxydes de silicium.

**30.** Dispersion selon l'une quelconque des revendications 22 à 29, **caractérisée en ce** *qu'elle* comprend un agent chélatant/stabilisant.

**31.** Dispersion selon l'une quelconque des revendications 22 à 30, **caractérisée en ce que** la phase liquide comprend un solvant choisi parmi l'eau, l'éthylène glycol, l'éthanol, le propylène glycol et leurs mélanges.

**32.** Dispersion selon l'une quelconque des revendications 22 à 30, *caractérisée en ce qu'elle* comprend :

- des particules de dioxyde de titane cristallisé,
- du tétrabutoxyde de titane à titre de composé précurseur d'un oxyde de métal B,
- du tétraorthosilicate à titre de composé du silicium, dans une proportion relative A/(B + Si) d'environ 50/50.

**Claims**

**1.** Process for obtaining a substrate (1) provided on at least part of its surface with a coating (3) having photocatalytic properties, crystallized particles (4) of an oxide of a metal A having photocatalytic properties being incorporated into the said coating using a mineral binder (5) comprising at least one oxide of a metal B also having photocatalytic properties in the crystallized state and optionally at least one oxide of a metal M devoid of photocatalytic properties and/or at least one silicon Si compound of the silicon oxide type, *characterized in that* the coating (3) is deposited from liquid-phase dispersions containing:

⇨ on the one hand, the said crystallized particles (4) of the oxide of metal A;

⇨ on the other hand, at least one precursor compound for the oxide of metal B of the binder (5) and optionally a precursor compound for the oxide of metal M and/or for the Si compound, in a relative proportion A/(B + M + Si) by weight with respect to the weight of metals and contained respectively in the composition of the oxide of metal A and of the precursor(s) for the oxide of metal B and optionally for the oxide of metal M and for the Si compound, of between 60/40 and 40/60.

**2.** Process according to Claim 1, *characterized in that* the mineral binder (5) is at least partially crystallized.

**3.** Process according to Claim 1 or Claim 2, *characterized in that* the oxides of metals A and B are chosen from at least one of the following oxides: titanium dioxide, zinc oxide, tin oxide and tungsten oxide, with preferably both the oxides of metals A and B in the form of titanium oxide.

**4.** Process according to one of the preceding claims, *characterized in that* the mineral binder comprises only the oxide of metal B, the proportion A/(B + M + Si) being expressed in the form A/B.

**5.** Process according to one of the preceding claims, *characterized in that* the mineral binder comprises the oxide of metal B, of the $TiO_2$ type and a silicon compound, of the $SiO_2$ type, the proportion A/(B + M + Si) then being expressed in the form A/(B + Si).

6. Process according to one of the preceding claims, *characterized in that* crystallized particles (4) of the oxide of A in the form of particles having a mean size of approximately 5 nm to 80 nm and domains of crystalline coherence having a mean size of approximately 5 nm to 20 nm are used.

7. Process according to one of the preceding claims, *characterized in that* the organometallic precursor compound (s) for the oxide of B and optionally for the oxide of M are chosen from the family of tetraalkoxides of formula $M(OR)_4$, trialkoxides of formula $MR'(OR)_3$ or metal halides, where R, R' are carbon-containing radicals.

8. Process according to one of the preceding claims, *characterized in that* the organometallic precursor compound (s) for the oxide of B and optionally for the oxide of M are dispersed in a liquid phase containing at least one chelating/stabilizing agent.

9. Process according to one of the preceding claims, *characterized in that* the coating is deposited by liquid-phase pyrolysis using a dispersion containing the precursor(s) of the organometallic-compound type, and the crystallized particles.

10. Process according to one of the preceding claims, *characterized in that* the coating is deposited by a sol-gel technique using a method of deposition of the dipping, cell-coating, laminar-coating or spray-coating type, using a dispersion containing the organometallic compound(s) and the crystallized particles.

11. Process according to one of the preceding claims, *characterized in that* the coating undergoes heat treatment, especially at at least 400°C.

12. Substrate (1) obtainable according to the process of one of the preceding claims.

13. Substrate (1) according to the preceding claim, *characterized in that* the said coating (3) has a porosity, calculated by measuring the refractive index, of greater than 40%.

14. Substrate (1) according to Claim 12 or Claim 13, *characterized in that* the coating comprises the crystallized particles, having a size of about 5 to 80 nm and domains of crystalline coherence having a size of about 5 nm to 20 nm, and the mineral binder at least partially in the form of grains having a size of between 5 and 25 nm.

15. Substrate (1) according to one of Claims 12 to 13, *characterized in that* the coating comprises crystallized $TiO_2$ particles essentially in the anatase form and a partially crystallized $TiO_2$-based mineral binder.

16. Substrate according to one of Claims 12 to 14, *characterized in that* the coating comprises $TiO_2$ particles essentially in anatase form and a mineral binder combining partially crystallized $TiO_2$ with $SiO_2$.

17. Substrate according to Claim 15 or 16, *characterized in that* the coating has a refractive index of at most 2.

18. Substrate according to one of Claims 12 to 17, *characterized in that* at least one layer, especially one having the function of being a barrier to alkali metals and/or having an optical and/or antistatic and/or adhesion function, is inserted between the said substrate and the said coating having photocatalytic properties.

19. Substrate according to one of Claims 12 to 18 or obtained in accordance with the process according to one of Claims 1 to 11, *characterized in that* it comprises at least one transparent material of the glass or plastic type.

20. Substrate according to Claim 19, *characterized in that* it forms part of insulating glazing, on the internal or external face, especially conventional insulating glazing having one or more gas interlayers or "vacuum" insulating glazing, or part of any laminated or "monolithic" glazing.

21. Substrate according to one of Claims 12 to 18, *characterized in that* it is made of a material of the metal or ceramic type, walling material, cladding material or roofing or flooring material, such as tiles and slates, stone or wood, tiling, cement, plastic, any architectural material, fibrous material of the mineral wool type for thermal and/or acoustic insulation, or textile fibre.

22. Liquid-phase dispersion comprising:

⇨ particles of crystallized titanium dioxide;

⇨ at least one precursor compound for an oxide of metal B having photocatalytic properties in the crystallized state;

⇨ optionally at least one precursor compound for an oxide of metal M and/or a silicon compound;

***characterized in that*** the particles, the precursors and the silicon compound are in a relative proportion A/(B + M + Si) of between 60/40 and 40/60.

23. Dispersion according to Claim 22, ***characterized in that*** the titanium dioxide particles are predominantly in the anatase crystal form.

24. Dispersion according to either of Claims 22 and 23, ***characterized in that*** the titanium dioxide particles have a mean size of approximately 5 to 80 nm and a crystalline coherence domain having a mean size of approximately 5 to 20 nm.

25. Dispersion according to any one of Claims 22 to 24, ***characterized in that*** the oxide of metal B is chosen from: titanium dioxide, zinc oxide, tin oxide and tungsten oxide.

26. Dispersion according to any one of Claims 22 to 25, ***characterized in that*** the oxide of metal M is chosen from aluminium oxide and zirconium oxide.

27. Dispersion according to any one of Claims 22 to 26, ***characterized in that*** the precursor compounds for the oxides of metal B and M are organometallic compounds.

28. Dispersion according to Claim 27, ***characterized in that*** the organometallic compounds are chosen from the family of tetraalkoxides of formula $X(OR)_4$ and trialkoxides of formula $XR'(OR)_3$ or metal halides, where R and R' represent carbon-containing radicals and X represents M or B.

29. Dispersion according to any one of Claims 22 to 28, ***characterized in that*** the silicon compound is chosen from silicon alkoxides.

30. Dispersion according to any one of Claims 22 to 29, ***characterized in that*** it comprises a chelating/stabilizing agent.

31. Dispersion according to any one of Claims 22 to 30, ***characterized in that*** the liquid phase comprises a solvent chosen from water, ethylene glycol, ethanol, propylene glycol and mixtures thereof.

32. Dispersion according to any one of Claims 22 to 30, ***characterized in that*** it comprises:

⇨ particles of crystallized titanium dioxide;

⇨ titanium tetrabutoxide as precursor compound for an oxide of metal B;

⇨ tetraorthosilicate as silicon compound, in a relative proportion A/(B + Si) of approximately 50/50.

**Patentansprüche**

1. Verfahren zur Herstellung eines Substrates (1), das auf wenigstens einem Teil seiner Oberfläche mit einer Beschichtung (3) mit photokatalytischen Eigenschaften versehen ist, wobei kristallisierte Teilchen (4) aus einem Oxid eines Metalls A mit photokatalytischen Eigenschaften in die Beschichtung mittels eines anorganischen Bindemittels (5) eingebaut sind, das mindestens ein Oxid eines Metalls B, das ebenfalls im kristallisierten Zustand photokatalytische Eigenschaften aufweist, und wahlweise mindestens ein Oxid eines Metalls M ohne photokatalytische Eigenschaften und/oder mindestens eine Verbindung des Siliciums Si vom Typ Siliciumoxid umfasst, **dadurch gekennzeichnet, dass** die Beschichtung (3) aus Dispersionen in der Flüssigphase aufgebracht wird, die enthalten:

- einerseits die kristallisierten Teilchen (4) aus dem Oxid des Metalls A und

- andererseits mindestens eine Vorläuferverbindung des Oxids des Metalls B des Bindemittels (5) und gegebenenfalls eine Vorläuferverbindung des Oxids des Metalls M und/oder der Si-Verbindung mit einem gewichtsmäßigen relativen Anteil von A/(B + M + Si), der auf das Gewicht der Metalle bezogen ist, an der Zusammensetzung des A-Oxids bzw. des/der Vorläufer/s des Oxids des Metalls B und gegebenenfalls des Oxids des Metalls M und der Si-Verbindung beteiligt ist und 60/40 bis 40/60 beträgt.

2. Verfahren nach Anspruch 1, **dadurch gekennzeichnet, dass** das anorganische Bindemittel (5) wenigstens teilweise kristallisiert vorliegt.

3. Verfahren nach Anspruch 1 oder 2, **dadurch gekennzeichnet, dass** die Oxide der Metalle A und B aus mindestens einem der folgenden Oxide Titandioxid, Zinkoxid, Zinnoxid und Wolframoxid ausgewählt sind.

4. Verfahren nach einem der vorhergehenden Ansprüche, **dadurch gekennzeichnet, dass** das anorganische Bindemittel nur das Oxid des Metalls B umfasst, wobei sich dann das Verhältnis von A/(B + M + Si) in der Form A/B schreibt.

5. Verfahren nach einem der vorhergehenden Ansprüche, **dadurch gekennzeichnet, dass** das anorganische Bindemittel das Oxid des Metalls B in Form von $TiO_2$ und eine Siliciumverbindung in Form von $SiO_2$ umfasst, wobei sich dann das Verhältnis von A/(B + M + Si) in der Form A/(B + Si) schreibt.

6. Verfahren nach einem der vorhergehenden Ansprüche, **dadurch gekennzeichnet, dass** kristallisierte Teilchen (4) aus dem A-Oxid in Form von Teilchen mit einer mittleren Größe von etwa 5 bis 80 nm und kristallinen Kohärenzbereichen mit einer mittleren Größe von etwa 5 bis 20 nm verwendet werden.

7. Verfahren nach einem der vorhergehenden Ansprüche, **dadurch gekennzeichnet, dass** die metallorganische/n Vorläuferverbindung/en des B-Oxids und gegebenenfalls des M-Oxids aus der Familie der Tetraalkoxide mit der Formel $M(OR)_3$, Trialkoxide mit der Formel $MR'(OR)_3$ oder der Metallhalogenide, wobei R und R' Kohlenwasserstoffreste bedeuten, ausgewählt werden.

8. Verfahren nach einem der vorhergehenden Ansprüche, **dadurch gekennzeichnet, dass** die metallorganische/n Vorläuferverbindung/en des B-Oxids und gegebenenfalls des M-Oxids in einer Flüssigphase, die mindestens ein chelatisierendes/stabilisierendes Mittel enthält, dispergiert wird/werden.

9. Verfahren nach einem der vorhergehenden Ansprüche, **dadurch gekennzeichnet, dass** die Beschichtung durch Pyrolyse aus der Flüssigphase ausgehend von einer Dispersion aufgebracht wird, die den/die Vorläufer vom Typ metallorganische Verbindung/en und die kristallisierten Teilchen enthält.

10. Verfahren nach einem der vorhergehenden Ansprüche, **dadurch gekennzeichnet, dass** die Beschichtung durch ein Sol-Gel-Verfahren mit einem Abscheidevorgang vom Typ Tauchen, "cell-coating", laminares Auftragen oder Aufsprühen aus einer Dispersion, die die metallorganische/n Verbindung/en und die kristallisierten Teilchen enthält, aufgebracht wird.

11. Verfahren nach einem der vorhergehenden Ansprüche, **dadurch gekennzeichnet, dass** die Beschichtung bei mindestens 400 °C wärmebehandelt wird.

12. Substrat (1), das entsprechend dem Verfahren nach einem der vorhergehenden Ansprüche hergestellt werden kann.

13. Substrat (1) nach dem vorhergehenden Anspruch, **dadurch gekennzeichnet, dass** die Beschichtung (3) eine durch Messung des Brechungsindexes berechnete Porosität aufweist, die mehr als 40 % beträgt.

14. Substrat (1) nach Anspruch 12 oder 13, **dadurch gekennzeichnet, dass** die Beschichtung kristallisierte Teilchen mit einer Größe von etwa 5 bis 80 nm und kristallinen Kohärenzbereichen mit einer Größe von etwa 5 bis 20 nm umfasst und das anorganische Bindemittel wenigstens teilweise in Form von Körnchen mit einer Größe von 5 bis 25 nm vorliegt.

15. Substrat (1) nach Anspruch 12 oder 13, **dadurch gekennzeichnet, dass** die Beschichtung kristallisierte $TiO_2$-Teilchen im Wesentlichen in Form von Anatas und ein teilweise kristallisiertes anorganisches Bindemittel auf der Basis von $TiO_2$ umfasst.

**16.** Substrat nach einem der Ansprüche 12 bis 14, **dadurch gekennzeichnet, dass** die Beschichtung $TiO_2$-Teilchen im Wesentlichen in Form von Anatas und ein anorganisches Bindemittel, das teilweise kristallisiertes $TiO_2$ und $SiO_2$ in sich vereint, umfasst.

**17.** Substrat nach Anspruch 15 oder 16, **dadurch gekennzeichnet, dass** der Brechungsindex der Beschichtung höchstens 2 beträgt.

**18.** Substrat nach einem der Ansprüche 12 bis 17, **dadurch gekennzeichnet, dass** mindestens eine Schicht mit Barrierefunktion gegen Alkalimetallionen und/oder mit optischer und/oder antistatischer und/oder Haftvermittlungsfunktion zwischen dem Substrat und der Beschichtung mit photokatalytischen Eigenschaften eingefügt ist.

**19.** Substrat nach einem der Ansprüche 12 bis 18 oder hergestellt entsprechend dem Verfahren nach einem der Ansprüche 1 bis 11, **dadurch gekennzeichnet, dass es** mindestens ein transparentes Material vom Typ Glas oder Kunststoff umfasst.

**20.** Substrat nach Anspruch 19, **dadurch gekennzeichnet, dass** es auf der Innen- oder Außenseite Bestandteil eines Isolierglases wie eines herkömmlichen Isolierglases mit Gasfüllung/en, eines Vakuumisolierglases, eines Verbundglases oder eines monolithischen Glases ist.

**21.** Substrat nach einem der Ansprüche 12 bis 18, **dadurch gekennzeichnet, dass** es aus einem Material vom Typ Metall, keramisches, Fassaden-, Verkleidungs-, Bedachungs- und Bodenmaterial wie Dachziegel, Schieferdachplatten, Stein, Holz, Steinplatten, Fliesen, Zementmaterial, Kunststoffmaterial, beliebiges architektonisches Material, faserförmiges Material vom Typ Gesteinswolle für die Wärme- und/oder Schalldämmung oder textile Fasern besteht.

**22.** Dispersion in der Flüssigphase, die:

- Teilchen aus kristallisiertem Titandioxid,
- mindestens eine Vorläuferverbindung für ein Oxid des Metalls B, das im kristallisierten Zustand photokatalytische Eigenschaften besitzt, und gegebenenfalls
- mindestens eine Vorläuferverbindung für ein Oxid des Metalls M und/oder eine Siliciumverbindung

umfasst, **dadurch gekennzeichnet, dass** die Teilchen, die Vorläufer und die Siliciumverbindung mit einem relativen Anteil von A/(B + M + Si) von 60/40 bis 40/60 vorliegen.

**23.** Dispersion nach Anspruch 22, **dadurch gekennzeichnet, dass** die Titandioxidteilchen überwiegend in der kristallinen Form des Anatas vorliegen.

**24.** Dispersion nach Anspruch 22 oder 23, **dadurch gekennzeichnet, dass** die Titandioxidteilchen eine mittlere Größe von etwa 5 bis 80 nm und einen kristallinen Kohärenzbereich mit einer mittleren Größe von etwa 5 bis 20 nm aufweisen.

**25.** Dispersion nach einem der Ansprüche 22 bis 24, **dadurch gekennzeichnet, dass** das Oxid des Metalls B aus Titandioxid, Zinkoxid, Zinnoxid und Wolframoxid ausgewählt ist.

**26.** Dispersion nach einem der Ansprüche 22 bis 25, **dadurch gekennzeichnet, dass** das Oxid des Metalls M aus Aluminium- und Zirconiumoxid ausgewählt ist.

**27.** Dispersion nach einem der Ansprüche 22 bis 26, **dadurch gekennzeichnet, dass** die Vorläuferverbindungen der Oxide der Metalle B und M metallorganische Verbindungen sind.

**28.** Dispersion nach Anspruch 27, **dadurch gekennzeichnet, dass** die metallorganischen Verbindungen aus der Familie der Tetraalkoxide mit der Formel $X(OR)_4$, Trialkoxide mit der Formel $XR'(OR)_3$ oder Metallhalogenide, wobei R und R' Kohlenwasserstoffreste bedeuten und X M oder B bedeutet, ausgewählt sind.

**29.** Dispersion nach einem der Ansprüche 22 bis 28, **dadurch gekennzeichnet, dass** die Siliciumverbindung aus Siliciumalkoxiden ausgewählt ist.

**30.** Dispersion nach einem der Ansprüche 22 bis 29, **dadurch gekennzeichnet, dass** sie ein chelatisierendes/stabilisierendes Mittel enthält.

**31.** Dispersion nach einem der Ansprüche 22 bis 30, **dadurch gekennzeichnet, dass** die Flüssigphase ein Lösungsmittel umfasst, das aus Wasser, Ethylenglykol, Ethanol, Propylenglykol und deren Gemischen ausgewählt ist.

**32.** Dispersion nach einem der Ansprüche 22 bis 30, **dadurch gekennzeichnet, dass** sie:

- Teilchen aus kristallisiertem Titandioxid,
- Titantetrabutoxid als Vorläuferverbindung eines Oxids des Metalls B und
- Tetraorthosilicat als Siliciumverbindung mit einem relativen Anteil von A/(B + Si) von etwa 50/50

umfasst.

FIG_1

FIG-2